Europäisches Patentamt

European Patent Office

Office européen des brevets

(19)

(11) Numéro de publication : **0 094 713**
**B1**

# (12) FASCICULE DE BREVET EUROPÉEN

(45) Date de publication du fascicule du brevet :
05.03.86

(51) Int. Cl.⁴ : **C 09 K 5/00**

(21) Numéro de dépôt : **83200655.5**

(22) Date de dépôt : **06.05.83**

(54) **Dispositif de chauffage à accumulation de chaleur.**

(30) Priorité : **18.05.82 FR 8208686**

(43) Date de publication de la demande :
**23.11.83 Bulletin 83/47**

(45) Mention de la délivrance du brevet :
**05.03.86 Bulletin 86/10**

(84) Etats contractants désignés :
**DE FR GB**

(56) Documents cités :
**FR-A- 2 253 844**
**GB-A- 528 231**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB**

(72) Inventeur : **Ortega, Francis**
**Société Civile S.P.I.D. 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

Jouve, 18, rue St-Denis, 75001 Paris, France

## Description

L'invention concerne un dispositif de chauffage, à accumulation de chaleur, comprenant un bain de sel(s) fondu(s), composé de fluorures de métaux alcalins et/ou alcalinoterreux et un matériau réducteur à base de carbone, enfermés de façon étanche aux gaz dans une enceinte métallique, des moyens de chauffage en contact thermique avec ledit bain, ainsi que des moyens servant à régler le transfert de chaleur entre ce dispositif et l'extérieur.

Ces dispositifs de chauffage, à accumulation de chaleur, sont bien connus de l'art antérieur, et leur utilisation par le public a largement progressé depuis la crise de l'énergie et l'augmentation rapide du coût du kilowatt-heure. En effet, ces dispositifs à accumulation de chaleur présentent l'avantage de consommer de l'énergie électrique pendant les heures dites creuses, généralement de nuit, pour lesquelles il existe un tarif réduit de consommation, et de restituer la chaleur emmagasinée, à volonté, normalement pendant les heures dites pleines, généralement la journée.

Dans ces dispositifs de chauffage, l'accumulateur de chaleur est constitué par des matériaux capables de stocker le maximum d'énergie calorifique sous le minimum de volume, placés dans une enceinte isolée. Ces matériaux peuvent être de plusieurs types, tels par exemple des solides comme des briques réfractaires ou autres, ou des liquides comme de l'eau pressurisée, ou encore des systèmes biphasés, à transition de phase solide/liquide, comme des sels, pour lesquels une quantité relativement grande de chaleur peut être accumulée sous forme de chaleur latente de fusion.

Le dispositif de chauffage, selon la présente invention, appartient à ce dernier type comme comprenant des substances ou mélanges de substances à point de fusion compris dans la gamme de températures de fonctionnement, plus spécifiquement des fluorures de métaux alcalins et/ou alcalino-terreux. Ces substances ou mélanges de substances sont connus de l'art antérieur, notamment du brevet 2 143 468 déposé le 26 juin 1972, au nom de N.V. PHILIPS'GLOEILAMPEN-FABRIEKEN, qui décrit l'utilisation de fluorures métalliques, tels que LiF, ou des mélanges eutectiques de fluorures métalliques, tels que les fluorures de lithium, de sodium, de potassium, de calcium et de magnésium, dont le point de fusion eutectique est compris entre 600 et 850 °C.

Ces dispositifs de chauffage selon l'art antérieur présentent un inconvénient rédhibitoire du fait de la corrosion de l'enceinte métallique au contact des fluorures, en présence d'une atmosphère non exempte d'oxygène. Une première solution à ce problème a consisté à utiliser des sels libérés de toute trace d'oxygène et à introduire ces sels dans une enceinte métallique, dans une atmosphère de gaz inerte, avant de la refermer hermétiquement. Cette solution est compliquée à mettre en œuvre et relativement coûteuse.

Une seconde solution, décrite dans la demande de brevet 2 253 844 déposée le 6 décembre 1974, au nom de N.V. PHILIPS'GLOEILAMPENFA-BRIEKEN, consiste à rajouter au bain de fluorures de l'aluminium métallique.

Cependant, si les phénomènes de corrosion étaient supprimés à partir de ce moyen, d'autres inconvénients non moins rédhibitoires se manifestent encore.

En effet, du fait des hautes températures à mettre en œuvre pour atteindre le point de fusion de ces sels fluorés, de façon à stocker de l'énergie sous forme de chaleur latente, il se produit des variations de volume, tant par dilatation volumique que par transition de phase, de telle sorte que les parois de l'enceinte métallique sont soumises à une charge mécanique intense.

La rupture de l'enceinte métallique contenant un sel fondu à haute température étant un risque inconcevable dans des applications domestiques, la demanderesse a été conduite à rechercher des moyens nouveaux propres à assurer en outre une fonction d'amortisseur de dilatation.

Conformément à la présente invention, le dispositif de chauffage est remarquable en ce que ledit matériau réducteur est une feuille de graphite appliquée contre les parois internes de ladite enceinte métallique, et dont on précisera ultérieurement la texture.

De cette manière, cette feuille de graphite assure la fixation de l'oxygène présent dans l'enceinte métallique et évite ainsi que les parois de ladite enceinte se corrodent au contact des fluorures.

En outre, la feuille de graphite joue le rôle de coussin amortisseur de dilatation.

La description qui va suivre, en regard du dessin annexé, permettra de mieux comprendre comme l'invention s'exécute et se poursuit.

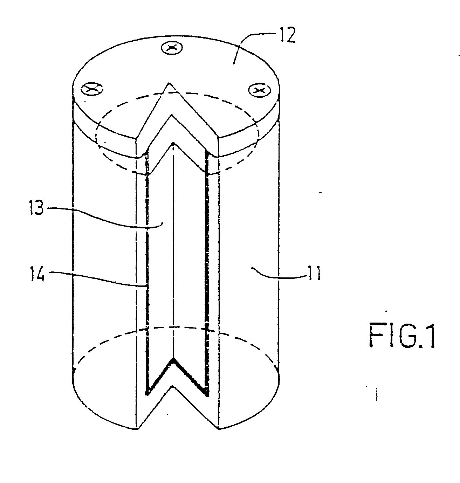

La fig. 1 représente une vue partiellement sectionnée d'un élément d'accumulation, pour un dispositif de chauffage, selon la présente invention.

Dans l'élément d'accumulation représenté à la fig. 1, dans une enceinte métallique de référence 11, typiquement en un acier inoxydable, muni d'un couvercle 12 pouvant être fermé de façon hermétique à l'air, est disposé un bain de fluorures 13, tel que par exemple un eutectique constitué à partir du mélange ternaire des fluorures de sodium, calcium et magnésium soit en pourcentage molaire : 65 % de $NaF$ + 23 % de $CaF_2$ + 12 % de $MgF_2$, dont le point de fusion se situe à environ 745 °C.

D'une façon générale, un dispositif de chauffage par accumulation de chaleur est constitué par la réunion de plusieurs éléments d'accumulation tels que représentés à cette fig. 1, disposés dans un bloc modulaire rempli d'un matériau isolant, tel qu'un matériau céramique poreux, ou constitué par une paroi double dans laquelle est disposé au moins un écran de rayonnement, alors qu'une atmosphère d'hydrogène, dont la pression peut être réglée au moyen d'un réservoir indépendant, muni d'un getter réversible à hydrogène et de moyens de chauffage indépendants et réglables, peut être introduite entre les deux parois, de façon à régler les échanges de chaleur entre l'élément accumulateur et l'extérieur, principe décrit dans le premier brevet cité.

Lorsque ces éléments accumulateurs fonctionnent, et que les sels ou l'atmosphère comprise dans l'enceinte ne sont pas exempts d'oxygène, il se produit une corrosion des pièces métalliques en contact avec le bain de fluorure qui peut conduire à une rupture de l'enceinte, d'autant plus qu'elle est soumise à une charge mécanique intense, du fait de l'accroissement de volume que subit le matériau actif par chauffage et/ou changement d'état.

Conformément à la présente invention, on introduit dans l'enceinte un matériau à base de carbone, avant de le refermer de façon étanche au gaz. En effet, le carbone assure la fixation de l'oxygène présent dans l'enceinte, d'une façon connue en soi, comme décrit par exemple dans l'ouvrage « Advances in molten salt chemistry », Vol. 3, page 183, PLENUMPRESS, New-York and London, mais qui n'avait jamais été utilisée dans des systèmes de chauffage de ce type. De cette manière, il ne se produit plus de corrosion intergranulaire des parois de l'enceinte.

Dans la réalisation selon l'invention, telle que représentée à la fig. 1, ce matériau est introduit sous la forme d'une feuille de graphite 14, appliquée contre les parois internes de l'enceinte métallique 11. Une telle feuille 14 est disponible dans le commerce soit sous la forme de rouleau de feuilles souples de « papyex ® » (commercialisé par la firme Le Carbone Lorraine et enregistré sous le N° 249758) soit une forme préférentielle, car de plus grande épaisseur (jusqu'à 1,3 millimètres) de feutre de graphite ou de mousse de graphite.

Ce matériau assure la même fonction que l'aluminium, à savoir la fixation de l'oxygène, normalement sous la forme de gaz carbonique ; mais, alors que l'aluminium se dépose au moins en partie à la surface des pièces métalliques en contact avec ledit bain, en une couche protectrice, le carbone fixe l'oxygène sous la forme de gaz.

Dans le cas d'excès d'aluminium, les surfaces métalliques en contact peuvent être attaquées, par suite de la dissolution de certains composants. La feuille de graphite, quant à lui, ne présente pas cet inconvénient puisque même en excès, il reste en l'état, tout au moins dans la gamme de températures utilisée.

De plus, outre sa fonction de réducteur, le matériau joue une fonction de coussin, amortisseur de dilatation entre le récipient métallique et le(s) fluorure(s). En effet, étant donné les variations importantes de température, entre globalement 0 et 1 000 °C, et les différences des coefficients de dilatation, l'enceinte métallique est soumise à des charges mécaniques intenses.

Alors qu'à l'état liquide, le sel fondu peut s'étendre dans le récipient, volontairement non rempli entièrement, à l'état solide, il charge d'une façon importante les parois du récipient 11, ce qui peut dans certains cas conduire à la rupture. La feuille de graphite ou plus spécialement le feutre de graphite, extrêmement compressible, permet alors de gagner les quelques millimètres nécessaires à l'expansion du bloc de sel de fluorure(s) 13, jusqu'à son passage à l'état liquide. Un couvercle 12 assure également, dans cette fig. 1, une fermeture hermétique, étanche au moins aux gaz.

### Revendications

1. Dispositif de chauffage, à accumulation de chaleur, comprenant un bain de sel(s) fondu(s), composé de fluorures de métaux alcalins et/ou alcalino-terreux, et un matériau réducteur à base de carbone, enfermés de façon étanche aux gaz dans une enceinte métallique, des moyens de chauffage en contact thermique avec ledit bain, ainsi que des moyens servant à régler le transfert de chaleur entre ce dispositif et l'extérieur, caractérisé en ce que ledit matériau réducteur est une feuille de graphite appliquée contre les parois internes de ladite enceinte métallique.

2. Dispositif de chauffage, à accumulation de chaleur, selon la revendication 1, caractérisé en ce que la feuille de graphite se présente sous la forme d'une mousse de carbone.

3. Dispositif de chauffage, à accumulation de chaleur, selon la revendication 1, caractérisé en ce que la feuille de graphite se présente sous la forme d'un feutre de carbone.

### Claims

1. A heating device with heat storage comprising a bath of molten salt(s) composed of alkali metal fluorides and/or alkaline earth metal fluorides and a reducing material or the basis of carbon sealed in a gas-tight manner in a metallic container, heating means in thermal contact with the said bath, and means serving to control the heat transfer between said device and the exterior, characterized in that the said reducing material is a foil or graphite applied to the inner sides of the walls of the said metallic container.

2. A heating device with heat storage as claimed in Claim 1, characterized in that the foil of graphite is in the form of spongy carbon.

3. A heating device with heat storage as claimed in Claim 1, characterized in that the foil of graphite is in the form of carbon felt.

### Patentansprüche

1. Heizvorrichtung mit Wärmespeicherung mit einem Bad mit geschmolzenem bzw. geschmolzenen aus Alkalimetallfluoriden und/oder Erdalkalimetallfluoriden und einem Reduktionsmaterial auf Basis von Kohlenstoff bestehendem bzw. bestehenden Salz bzw. Salzen, die auf gasdichte Art und Weise in einem Metallbehälter eingeschlossen sind, mit Heizmitteln, die mit dem genannten Bad in thermischem Kontakt stehen, sowie mit Mitteln, die zur Regelung der Wärmeübertragung zwischen der Vorrichtung und der Umgebung dienen, dadurch gekennzeichnet, dass das genannte Reduktionsmittel eine Graphitfolie ist, die an den Innenwänden des genannten metallischen Behälters befestigt ist.

2. Heizvorrichtung mit Wärmespeicherung nach Anspruch 1, dadurch gekennzeichnet, dass die Graphitfolie die Form eines schwammartigen Kohlenstoffes hat.

3. Heizvorrichtung mit Wärmespeicherung nach Anspruch 1, dadurch gekennzeichnet, dass die Graphitfolie die Form eines Kohlenstoffilzes hat.

FIG.1

1